(19) Europäisches Patentamt
European Patent Office
Office européen des brevets

(11) EP 2 338 921 B1

(12) **EUROPEAN PATENT SPECIFICATION**

(45) Date of publication and mention of the grant of the patent:
**11.02.2015 Bulletin 2015/07**

(51) Int Cl.:
***C08F 10/00*** *(2006.01)* ***C08F 4/6592*** *(2006.01)*

(21) Application number: **09015898.1**

(22) Date of filing: **22.12.2009**

(54) **Preparation of single-site catalysts**

Katalysatoren

Catalyseurs

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**29.06.2011 Bulletin 2011/26**

(73) Proprietor: **Borealis AG**
**1220 Vienna (AT)**

(72) Inventors:
- **Denifl, Peter**
  **00990 Helsinki (FI)**
- **Castro, Pascal**
  **00810 Helsinki (FI)**
- **Rautio, Soile**
  **06450 Porvoo (FI)**
- **Huhtanen, Lauri**
  **07940 Loviisa (FI)**
- **Oksam, Marita**
  **01150 Söderkulla (FI)**
- **Mustonen, Marja**
  **07700 Koskenkylän saha (FI)**

(74) Representative: **Maiwald Patentanwalts GmbH**
**Elisenhof**
**Elisenstrasse 3**
**80335 München (DE)**

(56) References cited:
**EP-A1- 0 255 790**
**WO-A1-2006/069733**
**WO-A2-03/051934**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention is directed to a new method for preparing a catalyst system with improved activity as well to the use thereof in olefin in polymerization process.

In the field of catalysts since many years great efforts are undertaken to further improve the catalyst types tailored for specific purposes. For instance in polymerization processes metallocene catalyst systems are widely used having many advantages.

At the beginning of the development of new metallocene catalyst systems only homogeneous catalyst systems were available. Such homogeneous catalyst systems are solutions of one or more catalyst components, e. g. a transition metal compound and optionally a cocatalyst. Homogeneous systems are used as liquids in the polymerisation process. Such systems have in general a satisfactory catalytic activity, but their problem has been that the polymer thus produced has a poor morphology (e.g. the end polymer is in a form of a fluff having a low bulk density). As a consequence, operation of slurry and gas phase reactors using a homogeneous catalyst system causes problems in practice for instance in terms of reactor fouling.

To overcome the problems of the homogeneous catalyst systems supported systems have been developed. These supported systems, known as heterogeneous catalyst systems, comprise carrier materials, such as porous organic and inorganic support materials, like silica, $MgCl_2$ or porous polymeric materials onto which the catalyst is loaded or supported.

However, also supported catalyst systems cause problems. For instance, to mention only one among many, it is difficult to get an even distribution of the catalyst components in the porous carrier material. Further leaching of the catalyst components from the support can occur. Such drawbacks lead to an unsatisfactory polymerisation behaviour of the catalyst, and as a result the morphology of the polymer product thus obtained is also poor. Further such classic heterogeneous catalyst systems show reduced catalyst activity which is of course detrimental as the catalyst amount must be increased which in turn leads to polymer products contaminated with rather high amounts of catalyst residues including silica residues, which might be very detrimental in some product applications.

For this reason a new metallocene catalyst system has been developed which significantly reduces the drawbacks of the known heterogeneous catalyst systems. Such new catalyst systems are self-supported, i.e. are not in need of catalytically inert support material, and are further featured by spherical particles with low porosity. Such new metallocene catalyst systems enable to increase the output rate of polymers since the bulk density of the polymerized product can be increased. For the first time such new metallocene catalyst systems have been for instance described in WO 03/051934 or in WO 2006/069733.

Also in EP 1 847 552 new self-supported metallocene catalyst systems are developed enabling the manufacture of multi-branched polypropylenes.

However nowadays the catalyst shall be not only suitable for specific processes but must also be economically and environmentally friendly. Thus there is the strong need to develop catalyst systems which are not only able to produce polypropylene with rather high bulk density but also have excellent catalytic activity and produced from acceptable materials in environmental, safety and healthy point of view.

Thus the object of the present invention is to find an improved and suitable process for the manufacture of new catalyst systems, where environmentally harmless materials in catalyst preparation are used, and which render possible to produce high bulk density polypropylene in an efficient manner, i.e. using a catalyst having activity at least at a reasonable level.

The finding of the present invention is that the catalyst system must be produced with a surfactant which does not contain toxic compounds, like perfluorooctanesulfonic acid (PFOS) and/or perfluorooctanoic acid (PFOA).

Thus the present invention is directed to a process for the preparation of a solid catalyst system in form of particles comprising the steps of

(a) preparing a solution (A) comprising

(i) a transition metal compound of formula (I)

$$L_mR_nMX_q \qquad (I)$$

wherein

"M" is a transition metal of anyone of the groups 3 to 10 of the periodic table (IUPAC), preferably a transition metal of anyone of the groups 4 to 6 of the periodic table (IUPAC), more preferably titanium (Ti), zirconium (Zr) or hafnium (Hf), i.e. zirconium (Zr) or hafnium (Hf),
each "X" is independently a monovalent σ-ligand,

each "L" is independently an organic ligand which coordinates to the transition metal (M),
"R" is a bridging group linking said organic ligands (L),
"m" is 2 or 3, preferably 2,
"n" is 0, 1 or 2, preferably 1,
"q" is 1, 2 or 3, preferably 2,
m+q is equal to the valency of the transition metal (M),

(ii) a cocatalyst (Co) comprising an element (E) of group 13 of the periodic table (IUPAC), preferably a cocatalyst (Co) comprising a compound of Al, and
(iii) a solvent (A'),

(b) generating an emulsion by dispersing the solution (A) in a solvent (B) and in the presence of a surfactant (S) wherein

(i) the solvent (B) constitutes the continuous phase of the emulsion and
(ii) the solution (A) constitutes in form of droplets the dispersed phase of the emulsion,
(iii) the transition metal compound of formula (I) and the cocatalyst (Co) are present in the droplets, and
(iv) the surfactant (S) is

($\alpha$) at least one compound (SP) of formula (II)
or
($\beta$) a reaction product (RP) of at least one compound (SP) of formula (II) and a compound (C) comprising an element (E) of group 13 of the periodic table (IUPAC), preferably a compound comprising Al, the formula (II) is

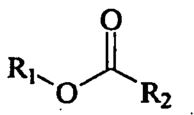 (II)

wherein

$R_1$ is a semi-, highly- or perhalogenated hydrocarbon residue, and
$R_2$ is a residue of $-C(R_3)=C(R_{3'})-R_4$,

wherein

$R_3$, $R_4$, $R_{3'}$, are independently from each other selected from the group consisting of H, $C_1$ to $C_{20}$ alkyl, $C_2$ to $C_{20}$ alkenyl, $C_2$ to $C_{20}$ alkinyl,

(c) solidifying said dispersed phase to convert said droplets to solid particles and
(d) optionally recovering said particles to obtain said solid catalyst system.

Thus, an additional object of the invention is to use the surfactant as defined here below in the formation and stabilising the emulsion used in the catalyst system preparation.

In one embodiment the surfactant (S) is a reaction product (RP) of at least one compound (SP) of formula (II) and a compound (C) comprising an element (E) of group 13 of the periodic table (IUPAC), preferably a compound comprising Al, like trialkylaluminium and/or aluminoxane.

It is especially notable that in the present invention the specific selected surfactant (S) used in the preparation of the catalyst system does not contain environmentally non-desired components, as disclosed above. A further finding of the present invention is that such produced catalyst system shows good catalyst activity.

In the following the essential features of the present invention are described in more detail.

The term "solution" throughout the present application indicates that two or more substances are homogenous mixed. At least one of the substances is a solvent in which the other substances (the solutes) are dissolved. In the instant invention the solvent of the solution (A) is the solvent (A') as defined in more detail below, whereas the solutes of the solution (A) are at least the transition metal compound of formula (I) and the cocatalyst (Co).

An "emulsion" according to this invention is a mixture of two liquid substances. One substance (the dispersed

phase) is dispersed in the other (the continuous phase) as droplets. In the present application the continuous phase is the solvent (B) and the dispersed phase (in the form of droplets) is the solution (A) containing the catalyst components.

"Surfactants" according to this invention are agents that lower the surface tension of a liquid and lower the interfacial tension between two phases, here the solution (A) and the solvent (B), and thus enable or facilitate the formation of emulsions as well act as stabilizer in the emulsion.

More precisely, the solvent (A') is a solvent which dissolves the components of the catalyst system, i.e. at least the transition metal compound of formula (I) and the cocatalyst (Co). Preferably the solvent (A') is an organic solvent (A'). Still more preferably the organic solvent (A') is selected from the group consisting of a linear alkane, cyclic alkane, aromatic hydrocarbon (like toluene, benzene, ethylbenzene, propylbenzene, butylbenzene and/or xylene), and halogen-containing hydrocarbon. Toluene is in particular preferred as a solvent (A') to form the solution (A) with the components of the catalyst system.

The solvent (B) may a single solvent or a mixture of different solvents, wherein solution (A) forms the dispersed phase. The solvent (B) may be immiscible with the solution (A) at least at the conditions (e. g. temperatures) used during the dispersing step (b).

The term "immiscible with the solution (A)" means that the solvent (B) is fully immiscible or partly immiscible i.e. not fully miscible with the dispersed phase solution (A).

Preferably said solvent (B) is inert in relation to the compounds of the catalyst system to be produced. The term "inert in relation to the compounds" means herein that the solvent (B) of the continuous phase is chemically inert, i.e. undergoes no chemical reaction with any catalyst system forming compound or catalyst system precursor forming compound (e.g. the transition metal compound of formula (I) and the cocatalyst (Co)). Thus, the solid particles of the catalyst system or any precursor thereof are formed in the droplets from the compounds which originate from the dispersed phase, i.e. are provided to the emulsion in the solution (A) dispersed into the continuous phase forming solvent (B).

It is preferred that the catalyst system compounds(s) used for forming the solid catalyst system (e.g. the transition metal compound of formula (I) and the cocatalyst (Co)), are not soluble in the solvent (B). Preferably, said catalyst system compounds(s) (e.g. the transition metal compound of formula (I) and the cocatalyst (Co)) are essentially insoluble in said continuous phase forming solvent (B). The solidified catalyst system is also insoluble into the mixture of (B) and (A').

Accordingly the immiscible solvent (B) preferably comprises a halogenated organic solvent, particularly a fluorinated organic solvent and/or a functionalized derivative thereof, still more preferably the immiscible solvent (B) comprises a semi-, highly- or perfluorinated hydrocarbon and/or a functionalized derivative thereof. As used throughout the present invention, the phrase "semi fluorinated" defines a compound in which fluorine atoms constitute at least a third but not more than one-half of the non-carbon substituents, preferably of the hydrogens, on the carbon atoms in the molecule. On the other hand the phrase "highly fluorinated" refers generally to a compound in which fluorine atoms constitute more than one-half but not all of the non-carbon substituents, preferably of the hydrogens, on the carbon atoms in the molecule. Perfluorinated hydrocarbons or perhalogenated hydrocarbons refer to those that have all of the non-carbon substituents, preferably all of the hydrogens, on carbon atoms replaced with fluorine, respectively. It is in particular preferred, that said immiscible solvent (B) comprises, i.e. consist of, a perfluorohydrocarbon or a functionalized derivative thereof, preferably $C_3$ to $C_{30}$ perfluoroalkanes, -alkenes or -cycloalkanes, more preferred $C_4$ to $C_{10}$ perfluoro-alkanes, - alkenes or -cycloalkanes, particularly preferred perfluorohexane, perfluoroheptane, perfluorooctane or perfluoro (methylcyclohexane), perfluoro (1,3- dimethylcyclohexane) or a mixture thereof.

The definition of semi-, highly- and perfluorinated hydrocarbon is equally applicable for semi-, highly- and perhaloginated hydrocarbons.

These (fluorinated) solvents (B) are chemically very inert and are very poor solvents for polar compounds such as for the solvent (A) and the catalyst system compounds(s) (e.g. the transition metal compound of formula (I) and the cocatalyst (Co)). Accordingly the reactive compounds (e.g. the transition metal compound of formula (I) and the cocatalyst (Co)) can be kept within the droplet phase so that no relevant reactions in the continuous phase occur, which would worsen the morphology of the solidified catalyst system particles.

Due to the above poor solvent properties of the solvent (B), the "droplet form" of the catalyst system compounds remains even if the solvent (A) used initially is removed during solidification e. g. by heating the system.

The finding of the present invention is that a specific surfactant (S) must be used for forming the emulsion. After the formation of the emulsion system, said catalyst system is formed in situ from the catalyst system compounds, i.e. the transition metal compound of formula (I) and the cocatalyst (Co), in said solution (A).

The surfactant (S) is

(i) at least one compound (SP) of formula (II)
and/or
(ii) a reaction product (RP) of at least one compound (SP) of formula (II) and a compound (C) comprising an element (E) of group 13 of the periodic table (IUPAC), preferably a compound comprising Al.

The formula (II) is

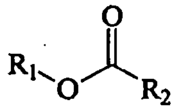

(II)

wherein

$R_1$ is a semi-, highly- or perhalogenated hydrocarbon residue, preferably is a semi-, highly- or perfluorinated hydrocarbon residue, and

$R_2$ is a residue of $-C(R_3)=C(R_{3'})-R_4$,

wherein

$R_3$, $R_4$, $R_{3'}$, are independently from each other selected from the group consisting of H, $C_1$ to $C_{20}$ alkyl, $C_2$ to $C_{20}$ alkenyl, $C_2$ to $C_{20}$ alkinyl,

It is in particular preferred that the residue "$R_2$" of the compound (SP) of formula (II) is - $CR_3=CH_2$, wherein

$R_3$ is selected from the group consisting of H, methyl, ethyl, n-propyl, iso-propyl, n-butyl, preferably H or methyl.

Thus in one embodiment the residue "$R_2$" of the compound (SP) of formula (II) is $-CH=CH_2$.

As stated above the residue "$R_1$" of the compound (SP) of formula (II) can be a halogenated, like fluorinated, hydrocarbon. Thus the residue "$R_i$" of the compound (SP) of formula (II) are based on halogenated, like fluorinated, hydrocarbons such as linear or branched aliphatic, alicyclic or aromatic halogenated, like fluorinated, hydrocarbons, such as a linear or cyclic halogenated, like fluorinated, alkyl or alkenyl. More preferably such hydrocarbons as defined in this paragraph are preferably semi-, highly- or perfluorinated hydrocarbons. It is in particular appreciated that the $R_1$ residue of the compound (SP) of formula (II) is either a highly- or perhalogenated hydrocarbon, like a highly- or perfluorinated hydrocarbon, such as linear or branched aliphatic, alicyclic or aromatic highly- or perhalogenated, like highly- or perfluorinated, hydrocarbons, such as a linear or cyclic highly- or perhalogenated, like highly- or perfluorinated, alkyl or alkenyl. Accordingly the residue "$R_1$" of compound (SP) of formula (II) is preferably a branched or linear highly- or perhalogenated, like highly- or perfluorinated, $C_3$ to $C_{30}$ alkyl, like a branched or linear highly- or perhalogenated, like highly- or perfluorinated, $C_6$ to $C_{30}$ alkyl. It is especially preferred that the residue "$R_2$" has the formula (III)

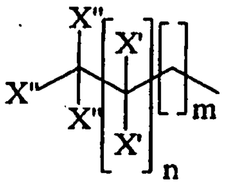

(III)

wherein

X, X' are independently from each other $C_2$ to $C_{20}$ alkyl or halogen, preferably are independently from each other $C_2$ to $C_{20}$ n-alkyl or F, more preferably are F,

X" is halogen, more preferably is F,

n is 0 to 30, preferably 1 to 25, most preferably 5 to 20,

m is 0 to 10, more preferably 1 to 8, most preferably 2 to 5.

Accordingly in a preferred embodiment the residue "$R_1$" has the formula (IIIa)

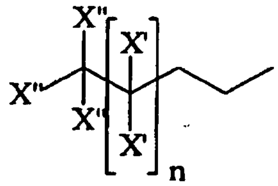

(IIIa)

wherein

X is halogen, more is preferably F,

X' is $C_2$ to $C_{20}$ alkyl or halogen, preferably is $C_2$ to $C_{20}$ n-alkyl or F, more preferably is F,

X" is halogen, more preferably is F,

n is 0 to 30, preferably 1 to 25, most preferably 5 to 20.

In n especially preferred embodiment the residue "$R_1$" of compound (SP) of formula (II) has the formula (IIIb)

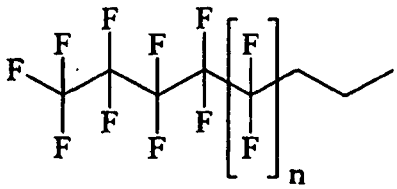

(IIIb)

wherein
n is 5 to 30, more preferably 5 to 20.
Keeping the above information in mind the compound (SP) is preferably of formula (IIa)

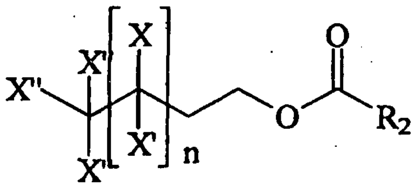

(IIa)

wherein

$R_2$ is a $-CR_3=CH_2$, wherein $R_3$ is selected from the group consisting of H, methyl, ethyl, n-propyl, iso-propyl, n-butyl, preferably H or methyl,

X is F,

X' is $C_2$ to $C_{20}$ alkyl or halogen, preferably is $C_2$ to $C_{20}$ n-alkyl or F, more preferably is F,

X" is halogen, more preferably is F,

n is 0 to 30, preferably 1 to 25, most preferably 5 to 20.

Thus in one embodiment the residue $R_2$ of the compound (SP) of formula (IIa) is $-CH=CH_2$.
Therefore in one preferred embodiment the compound (SP) is preferably of formula (IIb)

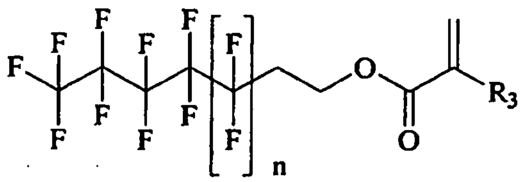

(IIb)

wherein

$R_3$ is selected from the group consisting of H, methyl, ethyl, n-propyl, iso-propyl, n-butyl, preferably is H or methyl, more preferably is H,

n is 0 to 30, preferably 1 to 25, most preferably 5 to 20.

As mentioned above the surfactant (S) is in one embodiment at least one compound (SP) as defined in more detail above. Accordingly it is preferred that the surfactant (S) comprises only compounds (SP) as defined above and no other compounds, i.e. surfactants and/or emulsifiers. Thus the surfactant (S) may only be one specific compound (SP) or a mixture of different compounds (SP) as defined above, the latter being preferred. Thus it is especially appreciated that the surfactant (S) is at least one compound (SP) of formula (IIa), more preferably is at least one compound (SP) of formula (IIb). In an especially preferred embodiment the surfactant (S) is a mixture of perfluoroalkylethyl acrylate esters (CAS number 65605-70-1).

In another preferred embodiment the surfactant (S) is a reaction product (RP) of at least one compound (SP) and the compound (C). Accordingly it is appreciated that the surfactant (S) is a reaction product (RP) of at least one compound of (SP) formula (II), more preferably of at least one compound (SP) of formula (IIa), still more preferably of at least one compound (SP) of formula (IIb), and a compound (C) comprising an element (E) of group 13 of the periodic table (IUPAC), preferably a compound comprising Al, like trialkylaluminium and/or aluminoxane, the latter especially preferred.

Further it is in particular appreciated that the compound (C) is the same compound as the cocatalyst (Co).

In case the surfactant (S) is a reaction product (RP) of at least one compound (SP) and the compound (C) it is prepared by mixing the compound (SP) and the compound (C) at temperatures above -20 °C, more preferably a temperatures above -10 °C and up to 60 °C.

As suitable solvent for mixing at least one compound (SP) with the compound (C) can be any solvent. However it is in particular preffered that the solvent (B) or the solvent (A') is used. In a preferred embodiment the solvent (A'), like toluene is used.

Typically the volume ratio (at 25 °C) of at least one compound (SP) to the compound (C) is from 0.02 to 0.15, preferably from 0.04 to 0.10.

In a especially preferred embodiment the surfactant (S) being the reaction product (RP) as defined in the instant invention has been produced before it is used in the claimed process.

The surfactant (S) being at least one compound (SP) and/or the reaction product (RP) is used in a process for the preparation of a catalyst. Further, an aspect is directed to a reaction product (RP) as defined herein as an surfactant or emulsifier.

The surfactant (S) can be added to the solution (A) or (B) before forming the emulsion. Alternatively the surfactant (S) may be added during the formation of the emulsion. In another embodiment the surfactant (S) may be added separately after the formation of the emulsion to the same. Preferably the surfactant (S) is added during or after the formation of the emulsion, the latter being preferred

Suitable processes for dispersing the solution (A) within the solvent (B) to form an emulsion is the use of a mechanical device as well as the use of ultrasound for mixing, as known to the skilled person. The process parameters, such as time of mixing, intensity of mixing, type of mixing, power employed for mixing, such as mixer velocity or wavelength of ultrasound employed, viscosity of solvent phase, are used for adjusting the size of the catalyst system.

Regardless of the method used to form the emulsion, its temperature prior to step (c) is preferably -20 to +50 °C, more preferably -10 to +40 °C, yet more preferably -5 to 30 °C, and still more preferably 0 to 20 °C. Suitable temperature is dependent on the solvents used.

In step (c) of the process of the invention the catalyst system is solidified from the droplets of the dispersed phase. According to the invention it is preferable to carry out this step continuously. During the solidification the solubility of the solvent of the dispersed phase used in emulsion formation in the continuous phase is increased. This change can be done e.g. by changing the temperature of the emulsion, by diluting the emulsion or by adding any other solubility changing agent into the emulsion or by any combinations of these methods. Other alternatives to affect solidification are prepolymerisation reaction within said dispersed phase, cross-linking (e.g. partially or fully) the catalyst within said

dispersed phase by adding a cross-linking agent; and inducing a chemical reaction within the dispersed phase which causes solid catalyst particles to solidify. A preferred method is to use the temperature change method.

In said preferred embodiment solidification is affected by subjecting the emulsion to a temperature change. More preferably the emulsion is subjected to a temperature change e.g. >2 °C/min, preferably > 10 °C/min, still more preferably >30 °C /min, and still more preferably >30 °C/s. The rate of the temperature change depends on whether more or less rapid temperature change is desired. According to one embodiment the temperature change is selected so that it is capable of causing instant solidification of the catalyst. By "instant solidification" is meant that solidification occurs within 0.01 to 5 seconds, preferably 0.05 to 1 second of exposure to the means by which the temperature change is to be affected. In one embodiment the emulsion is diluted by an additional amount of liquid medium before subjecting it to the solidification step. The appropriate temperature change in the emulsion required to achieve solidification will depend on the nature of the emulsion, any additional components present such as surfactants, the quantity of emulsion involved and/or the means by which the temperature change is affected. Typically, however, the temperature change required to bring about solidification of the catalyst system will be 5 to 100 °C, preferably 10 to 80 °C, more preferably 20 to 80°C, e.g. 40 to 70 °C.

In a preferred embodiment the temperature change is obtained by exposing the emulsion to an environment having a different temperature. Preferably the environment to which the emulsion is exposed is hotter than the emulsion. Thus preferably the environment to which the emulsion is exposed has a temperature which is at least 10 to 150 °C, preferably 20 to 120 °C, more preferably 30 to 100 °C, e.g. 50 to 80 °C, such as about 70 °C higher than that of the emulsion. The temperature should, however, be below the boiling point of the solvents. As mentioned above, in a particularly preferred process the emulsion may be prepared at a low temperature and/or cooled to increase the temperature difference between the emulsion and the environment to which it is exposed.

In a particularly preferred process of the invention the environment having a different temperature comprises a liquid, in which the catalyst is substantially insoluble, whereby the heat is transferred via convection. During the solidification the emulsion is preferably contacted with a large surplus of said liquid, in order to achieve a fast convective heat transport and thus a fast heat up of the emulsion, which leads to effective extraction of the solvent of the catalyst phase (catalyst droplets) to the receiving liquid and thus to effective solidification. As a result, a solid catalyst dispersion/suspension is obtained. This dispersion is much more stable compared to the emulsion and is thus easy to handle in any further handling or transporting steps.

Particularly preferred mediums for use as the temperature changing liquid include those used as the continuous phase in step (b), i.e. the solvent (B), of the process hereinbefore described. Still more preferably the medium used as the temperature changing liquid is the same solvent used in step (b), i.e. the solvent (B). Preferred mediums therefore include perfluorohexane, perfluoroheptane, perfluoro(methylcyclohexane), perfluoro(1,3-dimethylcyclohexane) and perfluorooctane.

The solid catalyst particles which are obtained by the solification step may be separated and recovered by any procedure known in the art from the suspension. For example, the suspension may be filtered. Other commonly known methods for isolating are decanting, centrifuging and flotation. The catalyst system may then be optionally washed and/or dried to remove any solvent residuals present in the particles. The washing and/or drying of the catalyst particles may be carried out in any manner conventional in the art.

For further details, embodiments and examples of the continuous and dispersed phase system, emulsion formation method, and solidification methods reference is made e.g. to the international patent application WO 03/051934 and WO 2006/069733.

The compounds needed for the manufacture of the catalysts system is at least the transition metal compound of formula (I) and the cocatalyst (Co) as described in further detail below.

Each organic ligand (L) is preferably independently

(a) a substituted or unsubstituted cycloalkyldiene, preferably a cycloalkyldiene selected from the group consisting of unsubstituted cyclopentadiene, substituted cyclopentadiene, monofused derivative of a cyclopentadiene, bifused derivative of a cyclopentadiene and multifused derivative of a cyclopentadiene, or

(b) an acyclic $\eta^1$-, an acyclic $\eta^2$- , an acyclic $\eta^3$-, an acyclic $\eta^4$- or an acyclic $\eta^6$-ligand composed of atoms from Groups 13 to 16 of the periodic table (IUPAC), preferably an acyclic $\eta^1$ -, an acyclic $\eta^2$ -, an acyclic $\eta^3$-, an acyclic $\eta^4$- or an acyclic $\eta^6$-ligand composed of atoms from Groups 13 to 16 of the periodic table (IUPAC) in which the open chain ligand may be fused with one or two, preferably two, aromatic or non-aromatic rings and/or bear further substituents, or

(c) a cyclic $\sigma$-, cyclic $\eta^1$-, a cyclic $\eta^2$-, a cyclic $\eta^3$-, a cyclic $\eta^4$- or a acyclic $\eta^6$-, mono-, bi- or multidentate ligand composed of unsubstituted or substituted mono-, bi- or multicyclic ring systems selected from aromatic or non-aromatic or partially saturated ring systems and containing carbon ring atoms.

More preferably at least one of the organic ligands (L), preferably both organic ligands (L), is(are) selected from

the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl.

Further in case the organic ligands (L) are substituted it is preferred that at least one organic lignad (L), preferably both organic ligands (L), comprise(s)

(a) one or more residues independently selected from the group consisting of halogen, $C_1$ to $C_{10}$ alkyl, $C_2$ to $C_{20}$ alkenyl, $C_2$ to $C_{20}$ alkinyl, $C_3$ to $C_{12}$ cycloalkyl, $C_6$ to $C_{20}$ aryl, $C_7$ to $C_{20}$-arylalkyl, $C_3$ to $C_{12}$ cycloalkyl which contains 1, 2, 3 or 4 heteroatom(s) in the ring moiety, $C_6$ to $C_{20}$ heteroaryl and $C_1$ to $C_{20}$ haloalkyl,
or more preferably
(b) one or more residues independently selected from the group consisting of halogen, $C_1$ to $C_{10}$ alkyl, $C_3$ to $C_{12}$ cycloalkyl, $C_6$ to $C_{20}$ aryl, $C_7$ to $C_{20}$-arylalkyl, $C_3$ to $C_{12}$ cycloalkyl which contains 1, 2, 3 or 4 heteroatom(s) in the ring moiety, $C_6$ to $C_{20}$ heteroaryl and $C_1$ to $C_{20}$ haloalkyl.

By "σ-ligand" is meant throughout the invention a group bonded to the transition metal (M) at one or more places via a sigma bond.

Further the ligands (X) are preferably independently selected from the group consisting of hydrogen, halogen, $C_1$ to $C_{20}$ alkyl, $C_1$ to $C_{20}$ alkoxy, $C_2$ to $C_{20}$ alkenyl, $C_2$ to $C_{20}$ alkynyl,C\\$_3$ to $C_{12}$ cycloalkyl, $C_6$ to $C_{20}$ aryl, $C_6$ to $C_{20}$ aryloxy, $C_7$ to $C_{20}$ arylalkyl, $C_7$ to $C_{20}$ arylalkenyl, -SR", -PR"$_3$, -SiR"$_3$, -OSiR"$_3$ and -NR"$_2$, wherein each R" is independently hydrogen, $C_1$ to $C_{20}$ alkyl, $C_2$ to $C_{20}$ alkenyl, $C_2$ to $C_{20}$ alkynyl, $C_3$ to $C_{12}$ cycloalkyl or $C_6$ to $C_{20}$ aryl.

Additionally the bridging group (R) may a bridge of 1 to 7 atoms length, preferably with at least one heteroatom. It is in particular appreciated that the bridging group(s) (R) has(have) the formula (IV)

-Y(R')(R")- (IV)

wherein

Y is carbon (C), silicon (Si) or germanium (Ge), and
R', R" are independently selected from the group consisting of is $C_1$ to $C_{20}$ alkyl, $C_4$ to $C_{10}$ cycloalkyl, $C_6$ to $C_{12}$ aryl, $C_7$ to $C_{12}$ arylalkyl, or trimethylsilyl.

According to a preferred embodiment said transition metal compound of formula (I) is a group of compounds known as metallocenes. Said metallocenes bear at least one organic ligand, generally 1, 2 or 3, e.g. 1 or 2, which is η-bonded to the metal, e.g. a $\eta^2$ - to $\eta^6$-ligand, such as a $\eta^5$-ligand.

Preferably, a metallocene according to this invention is a transition metal of anyone of the groups 4 to 6 of the periodic table (IUPAC), suitably titanocene, zirconocene or hafnocene, which contains at least one $\eta^5$-ligand, which is an optionally substituted cyclopentadienyl, an optionally substituted indenyl, an optionally substituted tetrahydroindenyl or an optionally substituted fluorenyl. Thus the transition metal compound has preferably the formula (V)

$(Cp)_2R_nMX_2$ (V)

wherein

"M" is zirconium (Zr), hafnium (Hf), or titanium (Ti), preferably zirconium (Zr) or hafnium (Hf),
each "X" is independently a monovalent anionic σ-ligand, preferably selected from the group consisting of hydrogen, halogen, $C_1$ to $C_{20}$ alkyl, $C_1$ to $C_{20}$ alkoxy, $C_2$ to $C_{20}$ alkenyl, $C_1$ to $C_{20}$ alkynyl, $C_3$ to $C_{12}$ cycloalkyl, $C_6$ to $C_{20}$ aryl, $C_6$ to $C_{20}$ aryloxy, $C_7$ to $C_{20}$ arylalkyl, $C_7$ to $C_{20}$ arylalkenyl, -SR", -PR"$_3$, -SiR"$_3$, -OSiR"$_3$ and -NR"$_2$, wherein each R" is independently hydrogen, $C_1$ to $C_{20}$ alkyl, $C_2$ to $C_{20}$ alkenyl, $C_2$ to $C_{20}$ alkynyl, $C_3$ to $C_{12}$ cycloalkyl or $C_6$ to $C_{20}$ aryl, more preferably each "X" is Cl,
each "Cp" is independently an unsaturated organic cyclic ligand which coordinates to the transition metal (M),
"R" is a bridging group linking two organic ligands (L)" preferably the bridging group (R) has the formula (IV)
"n" is 0 or 1, preferably 1, and
at least one "Cp"-ligand, preferably both "Cp"-ligands, is(are) selected from the group consisting of unsubstituted cyclopentadienyl, unsubstituted indenyl, unsubstituted tetrahydroindenyl, unsubstituted fluorenyl, substituted cyclopentadienyl, substituted indenyl, substituted tetrahydroindenyl, and substituted fluorenyl, preferably substituted indenyl.

The substituted Cp-ligand(s) may have one or more substituent(s) being selected form the group consisting of

halogen, hydrocarbyl (e.g. linear $C_1$ to $C_{20}$ alkyl, branched $C_3$ to $C_{20}$ alkyl, linear $C_1$ to $C_{20}$ alkenyl, branched $C_4$ to $C_{20}$ alkenyl, $C_2$ to $C_{20}$ alkinyl, $C_3$ to $C_{12}$ cycloalkyl, $C_1$ to $C_{20}$ alkyl substituted $C_5$ to $C_{20}$ cycloakyl, $C_5$ to $C_{20}$ cycloakyl substituted $C_1$ to $C_{20}$ alkyl wherein the cycloakyl residue is substituted by $C_1$ to $C_{20}$ alkyl, $C_6$ to $C_{20}$ aryl, $C_7$ to $C_{20}$ arylalkyl, $C_3$ to $C_{12}$-cycloalkyl which contains 1, 2, 3 or 4 heteroatom(s) in the ring moiety, $C_6$ to $C_{20}$-heteroaryl, $C_1$ to $C_{20}$-haloalkyl, -SiR"$_3$ , -SR", -PR"$_2$ or -NR"$_2$, each R" is independently a hydrogen or hydrocarbyl (e. g. $C_1$ to $C_{20}$ alkyl, $C_1$ to $C_{20}$ alkenyl, $C_2$ to $C_{20}$ alkinyl, $C_3$ to $C_{12}$ cycloalkyl, or $C_6$ to $C_{20}$ aryl) or e.g. in case of-NR"$_3$, the two substituents R" can form a ring, e.g. five-or six-membered ring, together with the nitrogen atom wherein they are attached to.

Further "R" of formula (V) is preferably a bridge of 1 to 7 atoms, e. g. a bridge of 1 to 4 C-atoms and 0 to 4 heteroatoms, wherein the heteroatom(s) can be e.g. silicon (Si), germanium (Ge) and/or oxygen (O) atom(s), whereby each of the bridge atoms may bear independently substituents, such as $C_1$ to $C_{20}$-alkyl, tri($C_1$ to $C_{20}$-alkyl)silyl, tri($C_1$ to $C_{20}$-alkyl)siloxy or $C_6$ to $C_{20}$-aryl substituents; or a bridge of 1 to 3, e.g. one or two, hetero atoms, such as silicon (Si), germanium (Ge) and/or oxygen (O) atom(s), e.g. -SiR'$_2$-, wherein each $R^1$ is independently $C_1$ to $C_{20}$-alkyl, $C_4$ to $C_{10}$ cycloalkyl, $C_6$ to $C_{20}$-aryl or tri($C_1$ to $C_{20}$-alkyl)silyl-residue, such as trimethylsilyl-.

The "Cp"-ligand of formula (V) is preferably cyclopentadienyl, indenyl, tetrahydroindenyl or fluorenyl, optionally substituted as defined above and may further bear a fused ring of 3 to 7 atoms, e.g. 4, 5 or 6, which ring may be aromatic or partially saturated.

In a suitable subgroup of the compounds of formula (V)
each "Cp"-ligand independently bears one or more, like 2, substituents selected from $C_1$ to $C_{20}$-alkyl, $C_5$ to $C_{20}$ cycloakyl substituted $C_1$ to $C_{20}$ alkyl wherein the cycloakyl residue is substituted by $C_1$ to $C_{20}$ alkyl, $C_6$ to $C_{20}$-aryl, $C_7$ to $C_{20}$-arylalkyl (wherein the aryl ring alone or as a part of a further moiety may further be substituted as indicated above), wherein R" is as indicated above, preferably $C_1$ to $C_{20}$-alkyl,
the ligand "X" is hydrogen (H), halogen, $C_1$ to $C_{20}$-alkyl, $C_1$ to $C_{20}$-alkoxy, $C_6$ to $C_{20}$-aryl, $C_7$ to $C_{20}$-arylalkenyl or -NR"$_2$ as defined above, e.g. -N($C_1$ to $C_{20}$-alkyl)$_2$, and the bridging group "R" is a methylene, ethylene or a silyl bridge, whereby the silyl can be substituted as defined above, e.g. a dimethylsilyl=, methylphenylsilyl=, methylcylohexylsilyl=, or trimethylsilylmethylsilyl= -bridge.

A specific subgroup includes the well known metallocenes of Zr, Hf and Ti with one or two, e.g. two, organic ligands (L) which may be bridged or unbridged cyclopentadienyl ligands optionally substituted with e.g. siloxy, alkyl and/or aryl as defined above, or with two unbridged or bridged indenyl ligands optionally substituted in any of the ring moieties with e.g. alkyl and/or aryl as defined above, e.g. at 2-, 3-, 4- and/or 7-positions. As specific examples e.g. bis (alkylcyclopentadienyl) Zr (or Ti or Hf) dihalogenides can be mentioned, such as bis-(n-butylcyclopentadienyl)$ZrCl_2$ and bis-(n-butylcyclopentadienyl)$HfCl_2$, see e.g. EP 129 368. One typical metallocene moiety is rac- $R_2$Si(2-Me-4-PhInd)$_2$$ZrCl_2$, wherein each R is independently an linear or cyclic alkyl of 1 to 10 C atoms, and wherein the Ph group can optionally be substituted by an alkyl group of 1 to 10 atoms, as one examples can be mentioned Rac-$Me_2$Si(2-Me-4-PhInd)$_2$$ZrCl_2$ used in polypropylene polymerisation.

Examples of compounds wherein the metal atom bears a-NR"$_2$ ligand are disclosed i.e. in WO 98/56831 and WO 00/34341. The contents of the documents are incorporated herein by reference. Further metallocenes are described e.g. in EP 260 130. As further examples of usable metallocenes may also be found e.g. from WO 97/28170, WO 98/46616, WO 98/49208, WO 99/12981, WO 99/19335, WO 98/56831, WO 00/34341, EP 423 101 and EP 537 130 as well as V. C. Gibson et al., in Angew. Chem. Int. Ed., engl., vol 38,1999, pp 428-447, the disclosures of which are incorporated herein by reference.

Said transition metal compounds of formula (I) and (V) being of metallocene type and their preparation are well known in the art. Metallocenes as defined in the instant invention are particularly preferred.

Alternatively, in a further subgroup of the metallocene compounds, the transition metal (M) bears a "Cp"-ligand as defined above and additionally a $\eta^1$- or $\eta^2$-ligand, wherein said ligands may or may not be bridged to each other. This subgroup includes so called "scorpionate compounds" (with constrained geometry) in which the transition metal (M) is complexed by a $\eta^5$-ligand bridged to a $\eta^1$- or $\eta^2$-ligand, preferably $\eta^1$- (for example $\sigma$ -bonded) ligand, e.g. a metal complex of a "Cp"-ligand as defined above, e.g. a cyclopentadienyl group, which bears, via a bridge member, an acyclic or cyclic group containing at least one heteroatom, e.g. -NR"$_2$ as defined above. Such compounds are described e.g. in WO 96/13529.

Any alkyl, alkenyl or alkynyl residue referred above alone or as a part of a moiety may be linear or branched, and contain preferably of up to 9, e.g. of up to 6, carbon atoms. Aryl is preferably phenyl or naphthalene. Halogen means F, Cl, Br or I, preferably Cl.

Another subgroup of the transition metal compounds of formula (I) usable in the present invention is known as non-metallocenes wherein the transition metal (M) (preferably a Group 4 to 6 transition metal, suitably Ti, Zr or Hf) has a coordination ligand other than cyclopentadienyl ligand.

The term "non-metallocene" used herein means compounds, which bear no cyclopentadienyl ligands or fused derivatives thereof, but one or more non-cyclopentadienyl $\eta$-, or $\sigma$-, mono-, bi- or multidentate ligand. Such ligands can be chosen e.g. from

(a) acyclic, $\eta^1$- to $\eta^4$- or $\eta^6$-ligands composed of atoms from Groups 13 to 16 of the periodic table (IUPAC), e.g. an acyclic pentadienyl ligand wherein the chain consists of carbon atoms and optionally one or more heteroatoms from groups 13 to 16 (IUPAC), and in which the open chain ligand may be fused with one or two, preferably two, aromatic or non-aromatic rings and/or bear further substituents (see e.g. WO 01/70395, WO 97/10248 and WO 99/41290), or (b) cyclic $\sigma$-, $\eta^1$- to $\eta^4$ --or $\eta^6$-, mono-, bi-or multidentate ligands composed of unsubstituted or substituted mono-, bi-or multicyclic ring systems, e.g. aromatic or non-aromatic or partially saturated ring systems, containing carbon ring atoms and optionally one or more heteroatoms selected from groups 15 and 16 of the periodic table (IUPAC) (see e.g. WO 99/10353).

Bi-or multidentate ring systems include also bridged ring systems wherein each ring is linked via a bridging group, e. g. via an atom from groups 15 or 16 of the periodic table (IUPAC), e.g. N, O or S, to the transition metal (M) (see e.g. WO 02/060963). As examples of such compounds, i.a. transition metal complexes with nitrogen-based, cyclic or acyclic aliphatic or aromatic ligands, e.g. such as those described in WO 99/10353 or in the Review of V. C. Gibson at al., in Angew. Chem. Int. Ed., engl. , vol 38,1999, pp 428-447, or with oxygen-based ligands, such as group 4 metal complexes bearing bidentate cyclic or acyclic aliphatic or aromatic alkoxide ligands, e.g. optionally substituted, bridged bisphenolic ligands (see i.a. the above review of Gibson et al). Further specific examples of non- $\eta^5$-ligands are amides, amide-diphosphane, amidinato, aminopyridinate, benzamidinate, azacycloalkenyl, such as triazabicycloalkenyl, allyl, beta-diketimate and aryloxide.

The preparation of metallocenes and non-metallocenes, and the organic ligands thereof, usable in the invention is well documented in the prior art, and reference is made e.g. to the above cited documents. Some of said compounds are also commercially available. Thus, said transition metal compounds can be prepared according to or analogously to the methods described in the literature, e.g. by first preparing the organic ligand moiety and then metallating said organic ligand ($\eta$-ligand) with a transition metal. Alternatively, a metal ion of an existing metallocene can be exchanged for another metal ion through transmetallation.

As a further requirement the inventive catalyst system must contain a cocatalyst (Co), wherein preferably the cocatalyst (Co) comprises an element of group 13 of the periodic table (IUPAC). Thus the cocatalyst (Co) comprises for instance aluminium (Al) or boron (B).

In a preferred embodiment the cocatalyst (Co) comprises a compound of Al. Examples of such cocatalyst (Co) are organo aluminium compounds, such as trialkylaluminium compound and/or aluminoxane compound, the latter especially preferred.

Further aluminoxane cocatalysts are described i.a. in WO 94/28034 which is incorporated herein by reference. These are linear or cyclic oligomers of having up to 40, preferably 3 to 20, -(Al (R"')O)- repeating units (wherein R"' is hydrogen, $C_1$ to $C_{10}$-alkyl (preferably methyl) or $C_6$ to $C_{18}$-aryl or mixtures thereof).

Such compounds of Al, preferably aluminoxanes, can be used as the only compound in the cocatalyst (Co) or together with other cocatalyst compound(s). Thus besides or in addition to the compounds of Al, i.e. the aluminoxanes, other cation complex forming cocatalyst compounds (Co), like boron compounds can be used. Said cocatalysts are commercially available or can be prepared according to the prior art literature. Preferably however the in the manufacture of the catalyst system only compounds of Al as cocatalyst (Co) are employed.

In particular preferred cocatalysts (Co) are the aluminoxanes, in particular the $C_1$ to $C_{10}$-alkylaluminoxanes, most particularly methylaluminoxane (MAO).

Further the mole-ratio (E/M) between the element (E) of group 13 of the periodic table (IUPAC), preferably aluminium (Al) and/or boron (B), more preferably aluminium (Al), to the transition metal (M) is preferably in the mol range of E/M 50/1 to 500/1 mol/mol, preferably in the range of 100/1 to 400/1 mol/mol, more preferably 200/1 to 300/1 mol/mol.

The above defined process leads also to new catalyst system as defined in more detail below.

Accordingly also described is a catalyst system, preferably obtainable, more preferably obtained, by the process as described above, comprising

(a) a transition metal compound of formula (I)

$$L_mR_nMX_q \qquad (I)$$

wherein

"M" is a transition metal of anyone of the groups 3 to 10 of the periodic table (IUPAC),
each "X" is independently a monovalent anionic $\sigma$-ligand,
each "L" is independently an organic ligand which coordinates to the transition metal (M),
"R" is a bridging group linking said organic ligands (L),
"m" is 2 or 3, preferably 2,

"n" is 0, 1 or 2, preferably 1,
"q" is 1, 2 or 3, preferably 2,
m+q is equal to the valency of the transition metal (M),
and

(b) a cocatalyst (Co) comprising an element (E) of group 13 of the periodic table (IUPAC), preferably a cocatalyst (Co) comprising a compound of Al,
wherein the catalyst system has a surface area of less than 25.0 $m^2/g$ measured according to ASTM D 3663.

Preferred transition metal compounds of formula (I) and cocatalysts (Co) are those as defined above.

Additionally the catalyst system is featured by the fact that it is self-supported, i.e. it does not comprise any catalytically inert support material, such as organic and inorganic support materials, like silica, $MgCl_2$ or porous polymeric material. As a consequence that the catalyst system is self-supported it has a rather low surface area as defined in further detail below. Thus, it should be noted that the polymer produced by using the catalyst produced according to the invention does not contain any silica residues.

A low surface area is insofar appreciated as therewith the bulk density of the produced polypropylene can be increased enabling a high throughput of material. Typically the catalyst system has a surface area measured according to the commonly known BET method with $N_2$ gas as analysis adsorptive (ASTM D 3663) of less than 25 $m^2/g$, more preferably of less than 20 $m^2/g$, yet more preferably of less than 15 $m^2/g$, still yet more preferably of less than 10 $m^2/g$. In some embodiments, the catalyst system shows a surface area of 5 $m^2/g$ or less.

The catalyst system can be additionally defined by the pore volume. Thus it is appreciated that the catalyst particle has a porosity of less than 1.40 ml/g, more preferably of less than 1.00 ml/g, still more preferably of less than 0.50 ml/g and even less than 0.20 ml/g. In another preferred embodiment the porosity is not detectable when determined with the method applied as defined in the example section.

Moreover the catalyst system typically has a mean particle size of not more than 500 μm, i.e. preferably in the range of 2 to 500 μm, more preferably 5 to 200 μm. It is in particular preferred that the mean particle size is below 80 μm, still more preferably below 70 μm. A preferred range for the mean particle size is 5 to 80 μm, more preferred 10 to 60 μm.

Moreover the catalyst system can be used for the manufacture of polymeric material, like polypropylene.

The present invention is further described by way of examples.

**EXAMPLES**

**1. Definitions/Measuring Methods**

The following definitions of terms and determination methods apply for the above general description of the invention as well as to the below examples unless otherwise defined.

**ICP analysis**

The elemental analysis of a catalyst was performed by taking a solid sample of mass, M, cooling over dry ice. Samples were diluted up to a known volume, V, by dissolving in nitric acid ($HNO_3$, 65 %, 5 % of V) and freshly deionised (DI) water (5 % of V). The solution was then added to hydrofluoric acid (HF, 40 %, 3 % of V), diluted with DI water up to the final volume, V, and left to stabilize for two hours.

The analysis was run at room temperature using a Thermo Elemental IRIS Advantage XUV Inductively Coupled Plasma - Atomic Excitation Spectrometer (ICP-AES) which was calibrated immediately before analysis using a blank (a solution of 5 % $HNO_3$, 3 % HF in DI water), a low standard (10 ppm Al in a solution of 5 % $HNO_3$, 3 % HF in DI water), a high standard (50 ppm Al, 50 ppm Hf, 20 ppm Zr in a solution of 5 % $HNO_3$, 3 % HF in DI water) and a quality control sample (20 ppm Al, 20 ppm Hf, 10 ppm Zr in a solution of 5 % $HNO_3$, 3 % HF in DI water).

The content of transition metal was monitored using the 282.022 nm and 339.980 nm lines and the content for zirconium using 339.198 nm line. The content of aluminium was monitored via the 167.081 nm line, when Al concentration in ICP sample was between 0-10 ppm and via the 396.152 nm line for Al concentrations between 10-100 ppm.

The reported values, required to be between 0 and 100, or further dilution is required, are an average of three successive aliquots taken from the same sample and are related back to the original catalyst using equation 1.

$$C = \frac{R \times V}{M} \qquad \text{Equation 1}$$

wherein

C is the concentration in ppm, related to % content by a factor of 10,000
R is the reported value from the ICP-AES
V is the total volume of dilution in ml
M is the original mass of sample in g

If dilution was required then this also needs to be taken into account by multiplication of C by the dilution factor.

**Catalyst activity/catalyst productivity**

A 5 litre stainless steel reactor was used for propylene polymerizations. 1100 g of liquid propylene (Borealis polymerization grade) was fed to the reactor. 0.2 ml of triethylaluminum (100%, purchased from Crompton) was fed as a scavenger and 15 mmol hydrogen as chain transfer agent. The reactor temperature was set to 30 °C. The catalyst was flushed into to the reactor with nitrogen overpressure. The reactor was heated up to 70 °C in a period of 15 minutes. After polymerisation for 30 minutes the remaining propylene was flushed out and the polymer was dried and weighed.
Polymer yield (based on 30 min polymerisation) is determined. Catalyst productivity is polymer yield [kg] divided by catalyst amount [g]. Catalyst activity is catalyst productivity divided by time [hours].

**Chemicals**

MAO was purchased from Albermarle and used as a 30 wt-% solution in toluene. Perfluoroalkylethyl acrylate esters (CAS number 65605-70-1) were purchased from the Cytonix Corporation, dried and degassed prior to use. Hexadecafluoro-1,3-dimethylcyclohexane was dried and degassed prior to use. Propylene was provided by Borealis and adequately purified before use. Triethylaluminum was purchased from Crompton and used in pure form. Hydrogen is provided by AGA and purified before use.All the chemicals and chemical reactions were handled under an inert gas atmosphere using Schlenk and glovebox techniques, with oven-dried glassware, syringes or needles.

**2. Preparation of the Examples:**

**Example 1:**

A catalyst solution was formed by reaction of 70.9 mg of *rac*-cyclohexyl(methyl)silanediyl-bis(2-methyl-4-(4'-*tert*-butyl-phenyl)inden-1-yl) zirconium dichloride with 5 mL of a 30 wt-.% MAO solution in toluene during 30 minutes inside the glovebox. In a 50 mL emulsification glass reactor equipped with "open baffles" and an overhead stirrer, a liquid-liquid 2-phase system was formed at 0 °C from 40 mL of hexadecafluoro-1,3-dimethylcyclohexane and the catalyst solution. When 0.13 mL of a mixture of perfluoroalkylethyl acrylate esters (surfactant) having different fluorinated chain lengths were added to the system, a red-orange emulsion was generated by stirring at 570 rpm. After 3 minutes, the emulsion stability was measured to be 19 seconds. The system was stirred for further 15 min at 0°C and 570 rpm. The emulsion was then transferred via a 2/4 teflon tube to 100 mL of hot PFC and stirred at 400 rpm. After 15 minutes, the oil bath was removed and the mixing speed was reduced to 300 rpm for 15 more minutes and finally turned off. The catalyst was left to settle up on top of the hexadecafluoro-1,3-dimethylcyclohexane solvent and after 45 minutes this solvent was siphoned off. The remaining red-orange catalyst was dried for 30 minutes at 50 °C by argon flushing, but a change of colour from red to white was observed. The drying procedure was then continued under vacuum during 1 hour at room temperature. 0.71 g of a red-orange free flowing powder was retrieved.
ICP analysis: Al = 26.1 wt-%; Zr = 0.40 wt-%.
Polymerisation activity = 7.9 kg-PP/g-cat/h

**Example 2:**

0,13 mL of of the same surfactant as in example 1 was pre-reacted with 1 mL of the 30 wt-% MAO solution in toluene inside the glovebox during at least 30 minutes at 20 °C. In parallel, a catalyst solution was formed by reaction of 70.9 mg of rac-cyclohexyl(methyl)silanediyl-bis(2-methyl-4-(4'-tert-butyl-phenyl)inden-1-yl) zirconium dichloride with 5 mL of a 30 wt-.% MAO solution in toluene during 30 minutes inside the glovebox.
In a 50 mL emulsification glass reactor equipped with "open baffles" and an overhead stirrer, a liquid-liquid 2-phase system was formed at 0 °C from 40 mL of hexadecafluoro- 1,3-dimethylcyclohexane and the catalyst solution. The surfactant / MAO mixture was added and the system was stirred at 570 rpm, forming a red-orange emulsion (measured emulsion stability = 15 s). After 15 minutes, the emulsion was transferred via 2/4 teflon tube to 100 mL of hot perfluoro-1,3-dimethylcyclohexane in a solidification reactor. After 15 minutes stirring at 400 rpm, the oil bath was removed and the mixing speed was reduced to 300rpm and finally switched off after 15 more minutes. The catalyst was left to settle up on top of the hexadecafluoro-1,3-dimethylcyclohexane solvent and after 45 minutes this solvent was siphoned off. The remaining red-orange catalyst was dried for 2 hours at 50 °C by argon flushing and no colour change was observed. 0.70 g of a red-orange free flowing powder was retrieved.
Polymerisation activity = 23.9 kg-PP/g-cat/h

**Example 3:**

0.13 mL of the same surfactant as in example 1 and 1 mL of a 30 wt.-% MAO solution in toluene were added successively into a 50 mL emulsification glass reactor containing 40 mL of hexadecafluoro-1,3-dimethylcyclohexane and were stirred during 90 minutes at room temperature (20 °C). Meanwhile, a catalyst solution was formed by reaction of 73,0 mg of *rac*-cyclohexyl(methyl)silanediyl-bis(2-methyl-4-(4'-*tert*-butyl-phenyl)inden-1-yl) zirconium dichloride with 5 mL of a 30 wt-.% MAO solution in toluene during 30 minutes at ambient temperature inside the glovebox. The emulsion reactor was cooled down to 0 °C and the catalyst solution was added. A red-orange emulsion formed immediately (measured emulsion stability = 24 seconds) and stirred during 15 minutes at 0 °C and 500 rpm. Then the emulsion was transferred via 2/4 teflon tube to 100 mL of hot PFC at 90 °C, and stirred at 400 rpm. After 15 minutes stirring, the oil bath was removed and the mixing speed reduced to 300rpm and finally turned off. The catalyst was left to settle up on top of the hexadecafluoro-1,3-dimethylcyclohexane solvent and after 45 minutes this solvent was siphoned off. The remaining red-orange catalyst was dried for 2 hours at 50 °C by argon flushing and no colour change was observed. 0.70 g of a red-orange free flowing powder was retrieved.
Polymerisation activity = 16.4 kg-PP/g-cat/h

**Comparative Example 1:**

Preparation of surfactant stock solution: 1 ml surfactant (2,2,3,3,4,4,5,5,6,6,7,7,8,8,9,9,9-heptadecafluoronyl)oxirane (PFPO) and 4 ml of hexadecafluoro-1,3-dimethylcyclohexane (PFC)
A catalyst solution was formed by reaction of 77.7 mg of *rac*-cyclohexyl(methyl)silanediyl-bis(2-methyl-4-(4'-*tert*-butyl-phenyl)inden-1-yl) zirconium dichloride with 5,4 mL of a 30 wt-.% MAO solution in toluene during 30 minutes inside the glovebox. In a 100 mL emulsification glass reactor equipped with "open baffles" and an overhead stirrer, a liquid-liquid 2-phase system was formed at -9°C from 50 mL of hexadecafluoro-1,3-dimethylcyclohexane and the previously prepared 5,4 ml catalyst solution. When 0,4 ml of stock surfactant solution of PFPO was added to the system, a red-orange emulsion was generated by stirring at 612 rpm. The system was stirred for further 15 min at -5°C and 612 rpm. The emulsion was then transferred via a 2/4 teflon tube to 100 mL of hot 90°C PFC and stirred at 496 rpm. During the addition of cold emulsion to hot receiving solution, the temperature was decreasing to 76 to 80°C. After 15 minutes, the oil bath was removed and the mixing speed was reduced to 300 rpm for 35 more minutes and finally turned off when temperature was about 35 °C. The catalyst was left to settle up on top of the hexadecafluoro-1,3-dimethylcyclohexane solvent and after 35 minutes this solvent was siphoned off. The remaining red-orange catalyst was dried for 60 minutes at 50 °C by argon flushing, but a change of colour from red to white was observed. The drying procedure was then continued under vacuum during 1 hour at room temperature. 1 g of a red-orange free flowing powder was retrieved.
ICP analysis: A1= 26.4 wt-%; Zr = 0.32 wt-%
Polymerisation activity = 26.5 kg-PP/g-cat/h

## Claims

**1.** Process for the preparation of a catalyst system comprising the steps of

(a) preparing a solution (A) comprising

(i) a transition metal compound of formula (I)

LmRnMXq (I)

wherein

"M" is a transition metal of anyone of the groups 3 to 10 of the periodic table (IUPAC),
each "X" is independently a monovalent σ-ligand,

each "L" is independently an organic ligand which coordinates to the transition metal (M),
"R" is a bridging group linking said organic ligands (L),
"m" is 2 or 3, preferably 2,
"n" is 0, 1 or 2, preferably 1,
"q" is 1, 2 or 3, preferably 2,
m+q is equal to the valency of the transition metal (M),

(ii) a cocatalyst (Co) comprising an element (E) of group 13 of the periodic table (IUPAC), preferably a cocatalyst (Co) comprising a compound of Al, and
(iii) a solvent (A'),

(b) generating an emulsion by dispersing the solution (A) in a solvent (B) and in the presence of a surfactant (S) wherein

(i) the solvent (B) constitutes the continuous phase of the emulsion and
(ii) the solution (A) constitutes in form of droplets the dispersed phase of the emulsion,
(iii) the transition metal compound of formula (I) and the cocatalyst (Co) are present in the droplets, and
(iv) the surfactant (S) is

($\alpha$) at least one compound (SP) of formula (II) and/or
($\beta$) a reaction product (RP) of at least one compound (SP) of formula (II) and a compound (C) comprising an element (E) of group 13 of the periodic table (IUPAC), preferably a compound comprising Al,
the formula (II) is

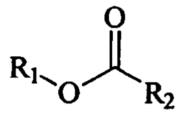

(II)

wherein

R1 is a semi-, highly- or perhaloginated hydrocarbon residue, and
R2 is -C(R3)=C(R3')-R4,
wherein
R3, R4, R3', are independently from each other selected from the group consisting of H, C1 to C20 alkyl, C2 to C20 alkenyl, and C2 to C20 alkinyl,

(c) solidifying said dispersed phase to convert said droplets to solid particles and
(d) optionally recovering said particles to obtain said catalyst system.

**2.** Process according to claim 1, wherein

(a) the ligands (X) are independently selected from the group consisting of hydrogen, halogen, C1 to C20 alkyl, C1 to C20 alkoxy, C1 to C20 alkenyl, C1 to C20 alkinyl, C3 to C12 cycloalkyl, C6 to C20 aryl, C6 to C20 aryloxy, C7 to C20 arylalkyl, C7 to C20 arylalkenyl, -SR", - PR"3, -SiR"3, -OSiR"3 and -NR"2,
wherein each R" is independently hydrogen, C1 to C20 alkyl, C1 to C20 alkenyl, C1 to C20 alkinyl, C3 to C 12 cycloalkyl or C6 to C20 aryl,
and/or
(b) at least one organic ligand (L), preferably both organic ligands (L), is(are independently) selected from the group consisting of unsubstituted cyclopentadienyl ligand, substituted cyclopentadienyl ligand, unsubstituted indenyl ligand, substituted indenyl ligand, unsubstituted fluorenyl ligand and substituted fluorenyl ligand.

**3.** Process according to claim 1 or 2, wherein

(a) transition metal (M) is zirconium (Zr) hafnium (Hf), or titanium (Ti), preferably zirconium (Zr) or hafnium (Hf),

and/or

(b) the bridging group(s) (R) has(have) the formula (IV)

-Y(R')(R")- (IV)

wherein

Y is C, Si or Ge, and

R', R" are independently selected from the group consisting of is C1 to C20 alkyl, C4 to C 10 cycloalkyl, C6 to C12 aryl, C7 to C12 arylalkyl, or trimethylsilyl.

**4.** Process according to anyone of the preceding claims, wherein at least one organic ligand (L), preferably both organic ligands (L), comprise(s) one or more residues independently selected from the group consisting of halogen, C1 to C20 alkyl, C1 to C20 alkenyl, C1 to C20 alkinyl, C3 to C 12 cycloalkyl, C5 to C20 cycloakyl substituted C1 to C20 alkyl wherein the cycloakyl residue is substituted by C1 to C20 alkyl, C6 to C20 aryl, C7 to C20 arylalkyl, C3 to C12 cycloalkyl which contains 1, 2, 3 or 4 heteroatom(s) in the ring moiety, C6 to C20 heteroaryl and C1 to C20 haloalkyl.

**5.** Process according to anyone of the preceding claims, wherein the co-catalyst (Co) and/or the compound (C) is(are) a trialkylaluminium and/or aluminoxane compound.

**6.** Process according to anyone of the preceding claims, wherein

(a) the solvent (A') is an aromatic hydrocarbon, like toluene,

and/or

(b) the solvent (B) is a fluorinated hydrocarbon.

**7.** Process according to anyone of the preceding claims, wherein the reaction product (RP) is obtainable, preferably is obtained, by contacting at least one compound (SP) of formula (II) with a compound (C) comprising an element (E) of group 13 of the periodic table (IUPAC), preferably a compound comprising Al, said contacting takes place preferably at a temperature of at least -20 °C, more preferably of at least - 5 °C.

**8.** Process according to claim 7, wherein the surfactant (S) being the reaction product (RP) is first produced and subsequently added to the mixture of the solution (A) and the solvent (B).

**9.** Process according to anyone of the preceding claims, wherein

(a) the residue "R1" of the compound (SP) of formula (II) is a perfluorinated C4 to C25 hydrocarbon residue,

and/or

(b) the residue "R2" of the compound (SP) of formula (II) is -CR3=CH-R4, wherein

R3 is selected from the group consisting of H, methyl, ethyl, n-propyl, iso-propyl, n-butyl, preferably H or methyl, and

R4 is selected from the group consisting of H, methyl, ethyl, n-propyl, iso-propyl, n-butyl, cyclohexyl, preferably H or methyl.

**10.** Process according to anyone of the preceding claims, wherein the residue "R1" has the formula (III)

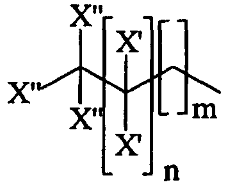 (III)

wherein

X, X' are independently from each other C2 to C20 alkyl or F, preferably are F,
X" is halogen, more preferably is F,
n is 0 to 30, preferably 1 to 25, most preferably 5 to 20.
m is 0 to 10, more preferably 1 to 8, most preferably 2 to 5.

**11.** Process according to anyone of the preceding claims, wherein the residue "R2" of the compound (SP) of formula (II) is -CR3=CH2, wherein the residue "R3" is selected from the group consisting of H, methyl, ethyl, n-propyl, iso-propyl, n-butyl, preferably H.

**12.** Process according to anyone of the preceding claims, wherein

(a) the surfactant (S) is solved in the same solvent as used as solvent (A), and/or
(b) the surfactant (S) is added during the formation of the emulsion.

**Patentansprüche**

**1.** Verfahren für die Herstellung eines Katalysatorsystems, umfassend die Schritte

(a) Herstellen einer Lösung (A), umfassend

(i) eine Übergangsmetallverbindung der Formel (I)

$$LmRnMXq \qquad (I)$$

wobei

"M" ein Übergangsmetall aus irgendeiner der Gruppen 3 bis 10 des Periodensystems (IUPAC) ist,
"X" jeweils unabhängig ein einwertiger σ-Ligand ist;
"L" jeweils unabhängig ein organischer Ligand ist, der mit dem Übergangsmetall (M) koordiniert,
"R" eine Brückengruppe ist, welche die organischen Liganden (L) verbindet,
"m" zwei oder drei, vorzugsweise zwei ist,
"n" 0, 1 oder 2, vorzugsweise 1 ist,
"q" 1, 2 oder 3, vorzugsweise 2 ist,
"m+q" gleich der Valenz des Übergangsmetalls (M) ist,

(ii) einen Cokatalysator (Co), umfassend ein Element (E) der Gruppe 13 des Periodensystems (IUPAC), vorzugsweise einen Cokatalysator (Co), umfassend eine Verbindung von Al, und
(iii) ein Lösungsmittel (A'),

(b) Herstellen einer Emulsion durch Dispergieren der Lösung (A) in einem Lösungsmittel (B) in der Gegenwart eines Surfactants (S), wobei

(i) das Lösungsmittel (B) die kontinuierliche Phase der Emulsion darstellt und
(ii) die Lösung (A) in der Form von Tröpfchen die dispergierte Phase der Emulsion darstellt,
(iii) die Übergangsmetallverbindung der Formel (I) und der Cokatalysator (Co) in der Form von Tröpfchen vorliegen, und
(iv) das Surfactant (S) ist

(α) mindestens eine Verbindung (SP) der Formel (II) und/oder
(β) ein Reaktionsprodukt (RP) mindestens einer Verbindung (SP) der Formel (II) und einer Verbindung (C), umfassend ein Element (E) der Gruppe 13 des Periodensystems (IUPAC), vorzugsweise einer Verbindung, umfassend Al, wobei die Formel (II) ist

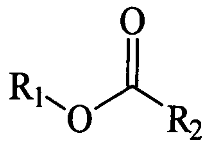

(II)

wobei

R1 ein semi-, hoch- oder perhalogenierter Kohlenwasserstoffrest ist, und
R2 -C(R3)=C(R3')-R4 ist, wobei
R3, R4, R3', jeweils unabhängig voneinander ausgewählt sind aus der Gruppe, bestehend aus H, C1-C20 Alkyl, C2-C20 Alkenyl, und C2-C20 Alkinyl,

(c) Verfestigen der dispergierten Phase, um die Tröpfchen in feste Teilchen zu überführen und
(d) gegebenenfalls Abtrennen der Teilchen, um das Katalysatorsystem zu erhalten.

**2.** Verfahren gemäß Anspruch 1, wobei

(a) die Liganden (X) unabhängig ausgewählt sind aus der Gruppe, bestehend aus Wasserstoff, Halogen, C1 bis C20 Alkyl, C1 bis C20 Alkoxy, C1 bis C20 Alkenyl, C1 bis C20 Alkinyl, C3 bis C12 Cycloalkyl, C6 bis C20 Aryl, C6 bis C20 Aryloxy, C7 bis C20 Arylalkyl, C7 bis C20 Arylalkenyl, -SR", -PR"3, -SiR"3, -OSiR"3 und -NR"2, wobei R" jeweils unabhängig Wasserstoff, C1 bis C20 Alkyl, C1 bis C20 Alkenyl, C1 bis C20 Alkinyl, C3 bis C12 Cycloalkyl oder C6 bis C20 Aryl, ist,
und/oder
(b) mindestens ein organischer Ligand (L), vorzugsweise beide organische Liganden (L), (unabhängig) ausgewählt ist (sind) aus der Gruppe, bestehend aus einem unsubstituierten Cylcopetadienyl-Liganden, substituierten Cyclopentadienyl-Liganden, unsubstituierten Indenyl-Liganden, substituierten Indenyl-Liganden, unsubstituierten Fluorenyl-Liganden und substituierten Fluorenyl-Liganden.

**3.** Verfahren gemäß Anspruch 1 oder 2, wobei

(a) das Übergangsmetall (M) Zirkonium (Zr), Hafnium (Hf), oder Titan (Ti) ist, vorzugsweise Zirkonium (Zr) oder Hafnium (Hf),
und/oder
(b) die Brückengruppe(n) (R) die Formel (IV) aufweist

-Y(R')(R")- (IV)

wobei

Y C, Si oder Ge ist, und

R', R" unabhängig ausgewählt sind aus der Gruppe, bestehend aus C1 bis C20 Alkyl, C4 bis C10 Cycloalkyl, C6 bis C 12 Aryl, C7 bis C 12 Arylalkyl oder Trimethylsilyl.

**4.** Verfahren gemäß irgendeinem der vorstehenden Ansprüche, wobei mindestens ein organischer Ligand (L), vorzugsweise beide organischen Liganden (L), einen oder mehrere Reste umfassen, die unabhängig ausgewählt sind aus der Gruppe, bestehend aus Halogen, C1 bis C20 Alkyl, C1 bis C20 Alkenyl, C1 bis C20 Alkinyl, C3 bis C 12 Cycloalkyl, C5 bis C20 Cycloalkyl, substituiertem C1 bis C20 Alkyl, wobei der Cycloalkylrest substituiert ist durch C1 bis C20 Alkyl, C6 bis C20 Aryl, C7 bis C20 Arylalkyl, C3 bis C12 Cycloalkyl, welches in der Ringeinheit 1, 2, 3 oder 4 Heteroatome enthält, C6 bis C20 Heteroaryl und C1 bis C20 Halogenalkyl.

**5.** Verfahren gemäß irgendeinem der vorstehenden Ansprüche, wobei der Cokatalysator (Co) und/oder die Verbindung (C) eine Trialkylaluminium- und/oder Aluminoxan-Verbindung ist (sind).

**6.** Verfahren gemäß irgendeinem der vorstehenden Ansprüche, wobei

(a) das Lösungsmittel (A') ein aromatischer Kohlenwasserstoff, wie Toluol, ist
und/oder
(b) das Lösungsmittel (B) ein fluorierter Kohlenwasserstoff ist.

**7.** Verfahren gemäß irgendeinem der vorstehenden Ansprüche, wobei das Reaktionsprodukt (RP) erhältlich ist, vorzugsweise erhalten wird, durch Kontaktieren mindestens einer Verbindung (SP) der Formel (II) mit einer Verbindung (C), umfassend ein Element (E) der Gruppe 13 des Periodensystems (IUPAC), vorzugsweise eine Verbindung, umfassend Al, wobei das Kontaktieren vorzugsweise bei einer Temperatur von mindestens -20°C, stärker bevorzugt bei mindestens -5°C durchgeführt wird.

**8.** Verfahren gemäß Anspruch 7, wobei das Surfactant (S) ein Reaktionsprodukt (RP) ist, welches zuerst hergestellt und nachfolgend dem Gemisch der Lösung (A) und des Lösungsmittels (B) zugegeben wird.

**9.** Verfahren gemäß irgendeinem der vorstehenden Ansprüche, wobei

(a) der Rest "R1" der Verbindung (SP) der Formel (II) ein perfluorierter
C4 bis C25 Kohlenwasserstoffrest ist,
und/oder
(b) der Rest "R2" der Verbindung (SP) der Formel (II) -CR3=CH-R4 ist,
wobei

R3 ausgewählt ist, aus der Gruppe, bestehend aus H, Methyl, Ethyl, n-Propyl, iso-Propyl, n-Butyl, vorzugsweise H oder Methyl, und
R4 ausgewählt ist, aus der Gruppe, bestehend aus H, Methyl, Ethyl, n-Propyl, iso-Propyl, n-Butyl, Cyclohexyl, vorzugsweise H oder Methyl.

**10.** Verfahren gemäß irgendeinem der vorstehenden Ansprüche, wobei der Rest
"R1" die Formel (III) aufweist,

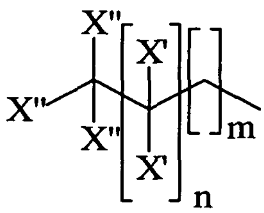 (III)

wobei

X, X' unabhängig voneinander C2 bis C20 Alkyl oder F sind, vorzugsweise F sind
X" Halogen ist, stärker bevorzugt F ist,
n 0 bis 30, vorzugsweise 1 bis 25, am stärksten bevorzugt 5 bis 20 ist,
m 0 bis 10, stärker bevorzugt 1 bis 8, am stärksten bevorzugt 2 bis 5 ist.

**11.** Verfahren gemäß irgendeinem der vorstehenden Ansprüche, wobei der Rest "R2" der Verbindung (SP) der Formel (II) -CR3=CH2 ist, wobei der Rest "R3" ausgewählt ist aus der Gruppe, bestehend aus H, Methyl, Ethyl, n-Propyl, iso-Propyl, n-Butyl, vorzugsweise H.

**12.** Verfahren gemäß irgendeinem der vorstehenden Ansprüche, wobei

(a) das Surfactant (S) im gleichen Lösungsmittel, das als Lösungsmittel (A) verwendet wird, gelöst ist,
und/oder
(b) das Surfactant (S) während der Bildung der Emulsion zugegeben wird.

## Revendications

**1.** Procédé pour la préparation d'un système catalyseur, comprenant les étapes

(a) de préparation d'une solution (A) comprenant

(i) un composé de métal de transition de formule (I)

LmRnMXq (I)

dans laquelle
"M" est un métal de transition de l'un quelconque des Groupes 3 à 10 du Tableau Périodique (IUPAC),
chaque "X" est indépendamment un ligand σ monovalent,
chaque "L" est indépendamment un ligand organique qui se coordonne au métal de transition (M),
"R" est un groupe pontant liant lesdits ligands organiques (L),
"m" vaut 2 ou 3, de préférence 2,
"n" vaut 0, 1 ou 2, de préférence 1,
"q" vaut 1, 2 ou 3, de préférence 2,
m+q est égale à la valence du métal de transition (M),
(ii) un cocatalyseur (Co) comprenant un élément (E) du Groupe 13 du Tableau Périodique (IUPAC), de préférence un cocatalyseur (Co) comprenant un composé d'Al, et
(iii) un solvant (A'),

(b) de génération d'une émulsion en dispersant la solution (A) dans un solvant (B) et en présence d'un tensioactif (S), où

(i) le solvant (B) constitue la phase continue de l'émulsion et
(ii) la solution (A) constitue, sous la forme de gouttelettes, la phase dispersée de l'émulsion,
(iii) le composé de métal de transition de formule (I) et le cocatalyseur (Co) sont présents dans les gouttelettes, et
(iv) le tensioactif (S) est

(α) au moins un composé (SP) de formule (II) et/ou
(β) un produit réactionnel (RP) d'au moins un composé (SP) de formule (II) et d'un composé (C) comprenant un élément (E) du Groupe 13 du Tableau périodique (IUPAC), de préférence un composé comprenant de l'Al,
la formule (II) est

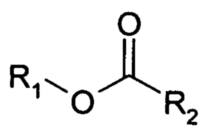

(II)

dans laquelle
R1 est un résidu hydrocarboné semi-halogéné, fortement halogéné ou perhalogéné, et
R2 est -C(R3)=C(R3')-R4,
où
R3, R4, R3', indépendamment les uns des autres, sont choisis dans l'ensemble constitué par H, alkyle en $C_1$ à $C_{20}$, alcényle en $C_2$ à $C_{20}$, et alcynyle en $C_2$ à $C_{20}$,

(c) de solidification de ladite phase dispersée pour convertir lesdites gouttelettes en particules solides et
(d) éventuellement de récupération desdites particules pour obtenir ledit système catalyseur.

**2.** Procédé selon la revendication 1, dans lequel

(a) les ligands (X) sont indépendamment choisis dans l'ensemble constitué par l'hydrogène, les halogènes, alkyle en $C_1$ à $C_{20}$, alcoxy en $C_1$ à $C_{20}$, alcényle en $C_1$ à $C_{20}$, alcynyle en $C_1$ à $C_{20}$, cycloalkyle en $C_3$ à $C_{12}$, aryle en $C_6$ à $C_{20}$, aryloxy en $C_6$ à $C_{20}$, arylalkyle en $C_7$ à $C_{20}$, arylalcényle en $C_7$ à $C_{20}$, -SR"-, -PR"3, -SiR"3, -OSiR"3 et -NR"2,
où chaque R" est indépendamment l'hydrogène ou un alkyle en $C_1$ à $C_{20}$, alcényle en $C_1$ à $C_{20}$, alcynyle en $C_1$ à $C_{20}$, cycloalkyle en $C_3$ à $C_{12}$ ou aryle en $C_6$ à $C_{20}$,
et/ou
(b) au moins un ligand organique (L), de préférence les deux ligands organiques (L), est (sont indépendamment) choisi(s) dans l'ensemble constitué par un ligand cyclopentadiényle non substitué, un ligand cyclopentadiényle substitué, un ligand indényle non substitué, un ligand indényle substitué, un ligand fluorényle non substitué et un ligand fluorényle substitué.

**3.** Procédé selon la revendication 1 ou 2, dans lequel

(a) le métal de transition (M) est le zirconium (Zr), le hafnium (Hf) ou le titane (Ti), de préférence le zirconium (Zr) ou le hafnium (Hf),
et/ou
(b) le ou les groupe(s) pontant(s) (R) est (sont) de formule (IV)

-Y(R')(R")- IV

dans laquelle

Y est C, Si ou Ge, et
R', R" sont indépendamment choisis dans l'ensemble constitué par alkyle en $C_1$ à $C_{20}$, cycloalkyle en $C_4$ à $C_{10}$, aryle en $C_6$ à $C_{12}$, alkylaryle en $C_7$ à $C_{12}$, et triméthylsilyle.

**4.** Procédé selon l'une quelconque des revendications précédentes, dans lequel au moins un ligand organique (L), de préférence les deux ligands organiques (L), comprend (comprennent) un ou plusieurs résidu(s) indépendamment choisi(s) dans l'ensemble constitué par les halogènes, alkyle en $C_1$ à $C_{20}$, alcényle en $C_1$ à $C_{20}$, alcynyle en $C_1$ à $C_{20}$, cycloalkyle en $C_3$ à $C_{12}$, alkyle en $C_1$ à $C_{20}$ substitué par un cycloalkyle en $C_5$ à $C_{20}$, le résidu cycloalkyle étant substitué par alkyle en $C_1$ à $C_{20}$, aryle en $C_6$ à $C_{20}$, arylalkyle en $C_7$ à $C_{20}$, cycloalkyle en $C_3$ à $C_{12}$ qui contient 1, 2, 3 ou 4 hétéroatome(s) dans le fragment cyclique, hétéroaryle en $C_6$ à $C_{20}$, et halogénoalkyle en $C_1$ à $C_{20}$.

**5.** Procédé selon l'une quelconque des revendications précédentes, dans lequel le cocatalyseur (Co) et/ou le composé (C) est (sont) un composé trialkylaluminium et/ou aluminoxane.

**6.** Procédé selon l'une quelconque des revendications précédentes, dans lequel

(a) le solvant (A') est un hydrocarbure aromatique, tel que le toluène,
et/ou
(b) le solvant (B) est un hydrocarbure fluoré.

**7.** Procédé selon l'une quelconque des revendications précédentes, dans lequel le produit réactionnel (RP) peut être obtenu, et de préférence est obtenu, par mise en contact d'au moins un composé (SP) de formule (II) avec un composé (C) comprenant un élément (E) du Groupe 13 du Tableau Périodique (IUPAC), de préférence un composé comprenant de l'Al, ledit contact ayant de préférence lieu à une température d'au moins - 20°C, plus préférablement d'au moins -5°C.

**8.** Procédé selon la revendication 7, dans lequel le tensioactif (S) qui est le produit réactionnel (RP) est d'abord produit et ensuite ajouté au mélange de la solution (A) et du solvant (B).

**9.** Procédé selon l'une quelconque des revendications précédentes, dans lequel

(a) le résidu "R1" du composé (SP) de formule (II) est un résidu hydrocarboné perfluoré en $C_4$ à $C_{25}$,
et/ou
(b) le résidu "R2" du composé (SP) de formule (II) est -CR3=CH-R4, où
R3 est choisi dans l'ensemble constitué par H, méthyle, éthyle, n-propyle, isopropyle, n-butyle, de préférence

H ou méthyle, et
R4 est choisi dans l'ensemble constitué par H, méthyle, éthyle, n-propyle, isopropyle, n-butyle, cyclohexyle, de préférence H ou méthyle.

**10.** Procédé selon l'une quelconque des revendications précédentes, dans lequel le résidu "R1" est de formule (III)

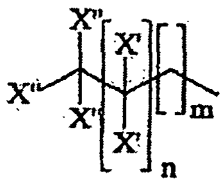

(III)

dans laquelle
X, X', indépendamment l'un de l'autre, sont un alkyle en $C_2$ à $C_{20}$ ou F, de préférence sont F,
X" est un halogène, plus préférablement est F,
n vaut de 0 à 30, de préférence de 1 à 25, le plus préférablement de 5 à 20,
m vaut de 0 à 10, plus préférablement de 1 à 8, le plus préférablement de 2 à 5.

**11.** Procédé selon l'une quelconque des revendications précédentes, dans lequel le résidu "R2" du composé (SP) de formule (II) est -CR3=CH2, où le résidu "R3" est choisi dans l'ensemble constitué par H, méthyle, éthyle, n-propyle, isopropyle, n-butyle, de préférence H.

**12.** Procédé selon l'une quelconque des revendications précédentes, dans lequel

(a) le tensioactif (S) est dissous dans le même solvant que celui utilisé en tant que solvant (A),
et/ou
(b) le tensioactif (S) est ajouté durant la formation de l'émulsion.

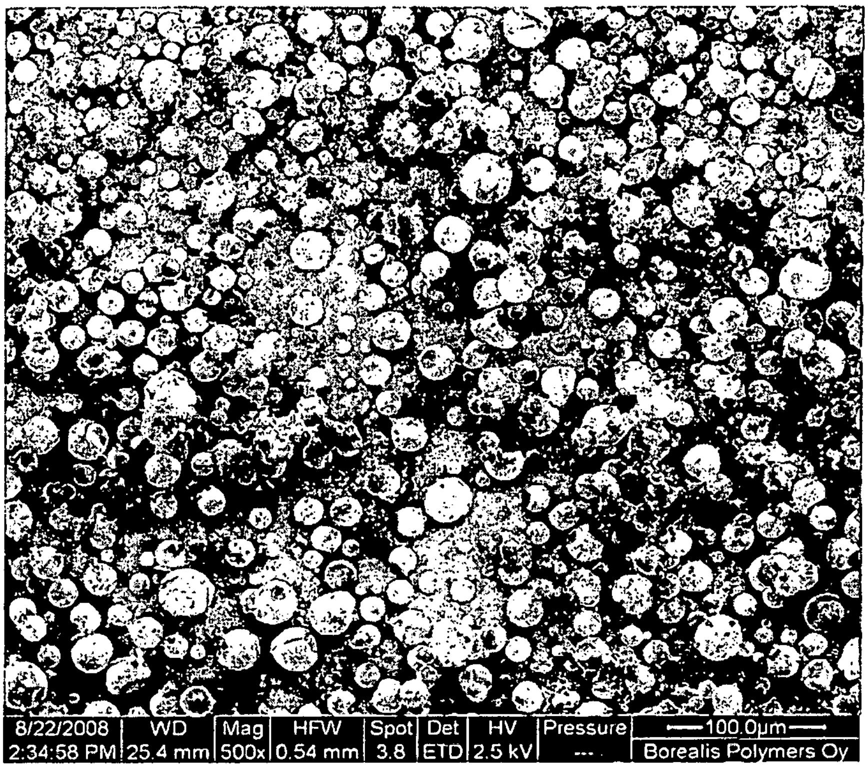


Figure 1: Example 1

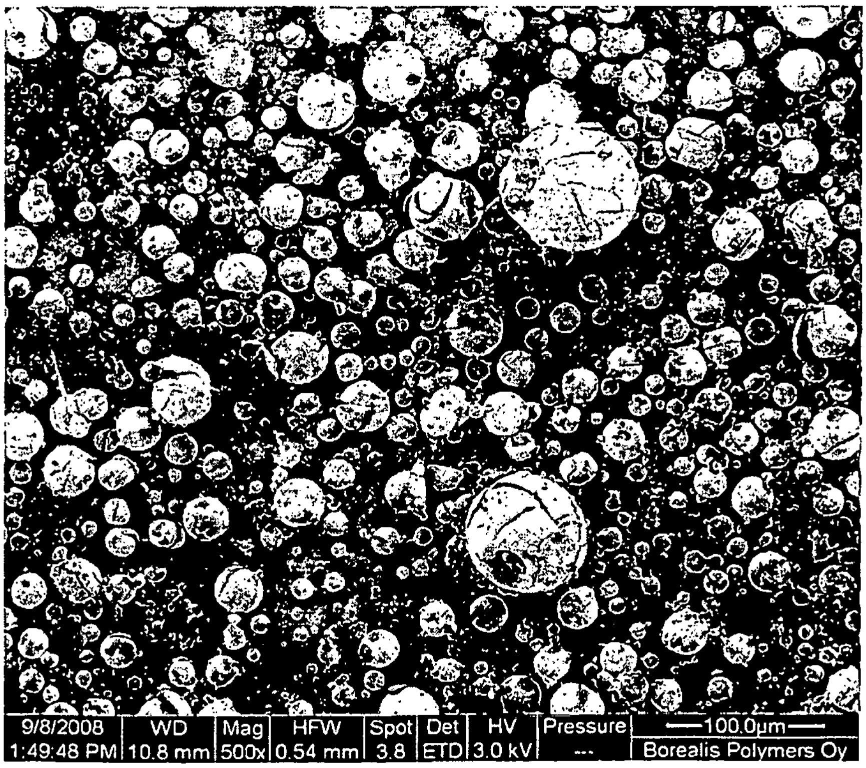


Figure 2: Example 2

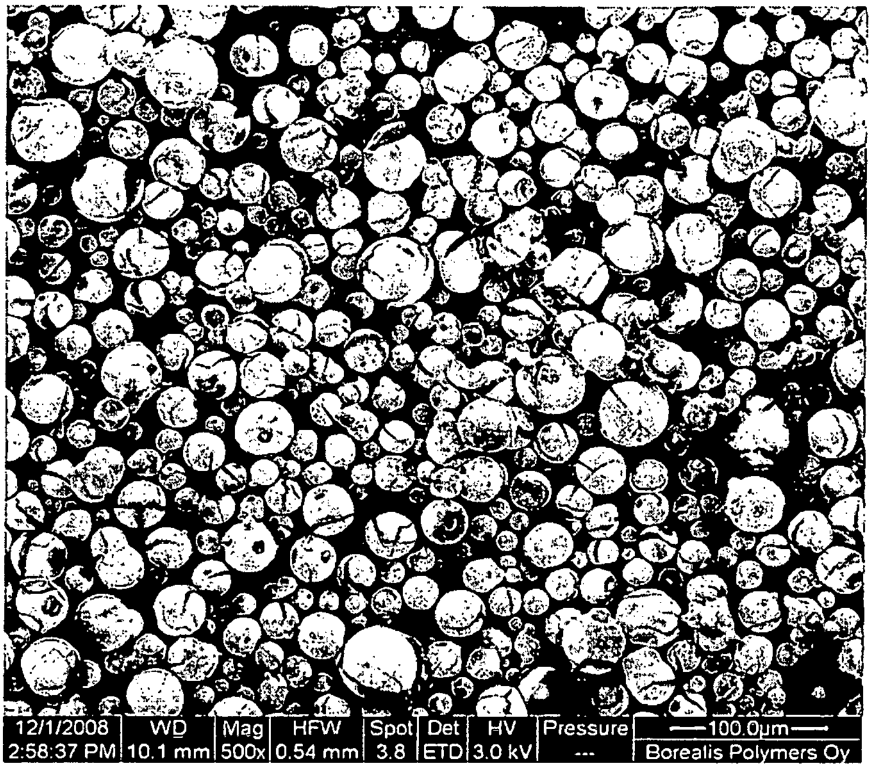


Figure 3: Example 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03051934 A
- WO 2006069733 A
- EP 1847552 A
- EP 129368 A
- WO 9856831 A
- WO 0034341 A
- EP 260130 A
- WO 9728170 A
- WO 9846616 A
- WO 9849208 A
- WO 9912981 A
- WO 9919335 A
- EP 423101 A
- EP 537130 A
- WO 9613529 A
- WO 0170395 A
- WO 9710248 A
- WO 9941290 A
- WO 9910353 A
- WO 02060963 A
- WO 9428034 A

### Non-patent literature cited in the description

- **V. C. GIBSON et al.** *Angew. Chem. Int. Ed., engl.,* 1999, vol. 38, 428-447
- **V. C. GIBSON.** *Angew. Chem. Int. Ed., engl,* 1999, vol. 38, 428-447